# EUROPEAN PATENT APPLICATION

(11) **EP 3 197 119 A1**
(43) Date of publication of application: **26.07.2017**
(21) Application number: 14884458.2
(22) Date of filing: 17.12.2014
(51) Int. Cl.: H04L 29/06, H04L 29/12

(54) **METHOD AND DEVICE FOR ALLOCATING NETWORK ADDRESS TRANSLATION (NAT) RESOURCES**

(30) Priority: 17.09.2014 CN 201410475189
(71) Applicant: ZTE Corporation, Shenzhen, Guangdong 518057 (CN)
(72) Inventor: HU, Yifen, Shenzhen Guangdong 518057 (CN); CAI, Lei, Shenzhen Guangdong 518057 (CN); BAO, Juntao, Shenzhen Guangdong 518057 (CN); YANG, Tao, Shenzhen Guangdong 518057 (CN); YI, Hong, Shenzhen Guangdong 518057 (CN)
(74) Representative: Novagraaf Technologies
(86) International application number: PCT/CN2014/094142
(87) International publication number: WO 2015/131612

(57) **Abstract**

A method and device for allocating Network Address Translation (NAT) resource are provided. The method includes : a current resource allocation condition of a public network address is acquired; and an NAT resource to a user corresponding to a current service is allocated on the basis of a preset rule according to the current resource allocation condition, wherein the NAT resource includes: a public network address and/or port required by the current service. The technical solution provided in the present disclosure solves the technical problem about a perfect NAT resource allocation solution in the related art and provides a better NAT resource allocation solution, and an allocation mode is simple and highly effective.

## Description

### Technical Field

The present disclosure relates to the field of communications, and in particular to a method and device for allocating Network Address Translation (NAT) resource.

### Background

At present, with the rapid development of network services, the requirements of customers for the quality of services are high increasingly. The NAT service has become a basic service for solving shortage of Internet Protocol version 4 (IPv4) addresses currently. The IPV4 may effectively and smoothly transit to an Internet Protocol version 6 (IPv6) stage by perfecting functions thereof.

With the acceleration of an IPV4 address run-out progress, more and more Request For Comment (RFC) drafts based on the NAT technology are promoted, which are mainly centralized in various measures for the translation from the IPv4 to the IPv6, such as NAT44, Dual-stack lite, NAT64 and NAT46.

Either the translation from IPv4 to IPv6 or the mutual translation between IPv4 and IPv6, for NAT technology, the state translation inevitably exists in the process of the translation of network address. That is, a translation device such as a Carrier Grade NAT (CGN) must store the information before and after translation.

As mentioned in RFC6888 REQ-2 and RFC4787 REQ-2, the same address behaviour is required.

Regarding Port Address Translation (PAT) and Port Range (PR), how to allocate a public network address and a corresponding port to a user has not been unified and standardized yet in the related art. A lot of Services needing the same public address exist in the present network. For example, it exists in the client -server type of applications (for example, a File Transfer Protocol (FTP), a control link and a data link require the same public network address), exists in online payment application, and also exists in Person to Person (P2P) applications. Different resource allocation behaviours significantly affect these services. For relatively poorer resource allocation behaviour, only all ports of one public network address are allocated, and then another public network address will be allocated, which may cause that ports of the previous public network address are exhausted and the same address behaviour cannot be guaranteed.

An effective solution has not been proposed yet at present for the problem in the related art that a perfect NAT resource allocation solution is not provided.

### Summary

The present disclosure provides a method and device for allocating an NAT resource, which are intended to at least solve the above-mentioned problem.

According to an embodiment of the present disclosure, an NAT resource allocation method is provided, which may include that: a current resource allocation condition of a public network address is acquired; and an NAT resource to a user corresponding to a current service is allocated on the basis of a preset rule according to the current resource allocation condition, wherein the NAT resource includes: a public network address and/or port required by the current service.

Preferably, the preset rule may be determined according to at least one of the following parameters: a maximum quantity of private network addresses corresponding to a public network address, quantity of ports allocated to the user corresponding to the current service, quantity of users corresponding to the public network address, a current usage condition of ports in the public network address, and a corresponding relationship between the public network address and the users.

Preferably, the step that an NAT resource to a user corresponding to a current service is allocated on the basis of a preset rule according to the current resource allocation condition may include that: when the current usage condition of ports in the current public network address is lower than a preset threshold, the ports in the current public network address are allocated to the user.

Preferably, the step that an NAT resource of a current service is allocated on the basis of a preset rule according to the resource allocation condition may include that: a port set used by the user is determined according to the quantity of the ports allocated to the user corresponding to the current service as for each public network address; and the ports are allocated to the user cyclically according to an ascending sequence of port numbers in the port set.

Preferably, the step that an NAT resource to a user corresponding to a current service is allocated on the basis of a preset rule according to the resource allocation condition may further include that: the same public network address is allocated to the user according to a Try-Best principle.

Preferably, the process that an NAT resource to a user corresponding to a current service is allocated on the basis of a preset rule according to the resource allocation condition may further include that: Application Layer Gateway (ALG) well-known ports are prohibited from being allocated to the user, and ports used by a specified service are prohibited from being predefined.

According to another embodiment of the present disclosure, an NAT resource allocation device is also provided, which may include: an acquisition module, configured to acquire a current resource allocation condition of a public network address; and an allocation module, configured to allocate an NAT resource to a user corresponding to a current service on the basis of a preset rule according to the current resource allocation condition, wherein the NAT resource includes: a public network address and/or port required by the current service.

Preferably, the allocation module may be configured to allocate the NAT resource to the user corresponding to the current service on the basis of the preset rule determined according to at least one of the following parameters: a maximum quantity of private network addresses corresponding to a public network address, quantity of ports allocated to the user corresponding to the current service, quantity of users corresponding to the public network address, a current usage condition of ports in the public network address, and a corresponding relationship between the public network address and the users.

Preferably, the allocation module may be configured to allocate, when the current usage condition of ports in the current public network address is lower than a preset threshold, the ports in the current public network address to the user.

Preferably, the allocation module may include: a determination unit, configured to, for each public network address, determine a port set used by the user according to the quantity of the ports allocated to the user corresponding to the current service; and an allocation unit, configured to allocate the ports to the user cyclically according to an ascending sequence of port numbers in the port set.

By means of the present disclosure, the technical solution for allocating a public network address and/or port of a current service according to an acquired current allocation condition of an NAT resource is adopted, thereby solving the technical problem about a perfect NAT resource allocation solution in the related art, and providing a better NAT resource allocation solution. Moreover, the allocation mode is simple and highly effective.

### Brief Description of the Drawings

The drawings illustrated herein are intended to provide further understanding of the present disclosure, and form a part of the present application. The schematic embodiments and illustrations of the present disclosure are intended to explain the present disclosure, and do not form improper limits to the present disclosure. In the drawings:
Fig. 1 is a flowchart of an NAT resource allocation method according to an embodiment of the present disclosure;
Fig. 2 is a schematic diagram of a resource usage state according to an embodiment of the present disclosure;
Fig. 3 is a schematic diagram of a resource usage jump according to an embodiment of the present disclosure;
Fig. 4 is a structural diagram of an NAT resource allocation device according to a preferred embodiment of the present disclosure; and
Fig. 5 is another structural diagram of an NAT resource allocation device according to a preferred embodiment of the present disclosure.

### Detailed Description of the Embodiments

The present disclosure will be illustrated below with reference to the drawings and in conjunction with the embodiments in detail. It is important to note that the embodiments in the present application and the characteristics in the embodiments may be combined under the condition of no conflicts.

Other characteristics and advantages of the present disclosure will be elaborated in the following description, become partially obvious in the description, or are understood by implementing the present disclosure. Purposes and other advantages of the present disclosure may be implemented and obtained by means of the description, the claims, and structures specially pointed out in the drawings.

In order to make those skilled in the art better understand the solutions of the present disclosure, the technical solutions in the embodiments of the present disclosure will be clearly and completely described below with reference to the drawings in the embodiments of the disclosure. Apparently, the described embodiments are only some embodiments of the present disclosure, not all of the embodiments. On the basis of the embodiments in the present disclosure, all other embodiments obtained on the premise of no creative work of those of ordinary skill in the art should fall in the scope of protection of the present disclosure.

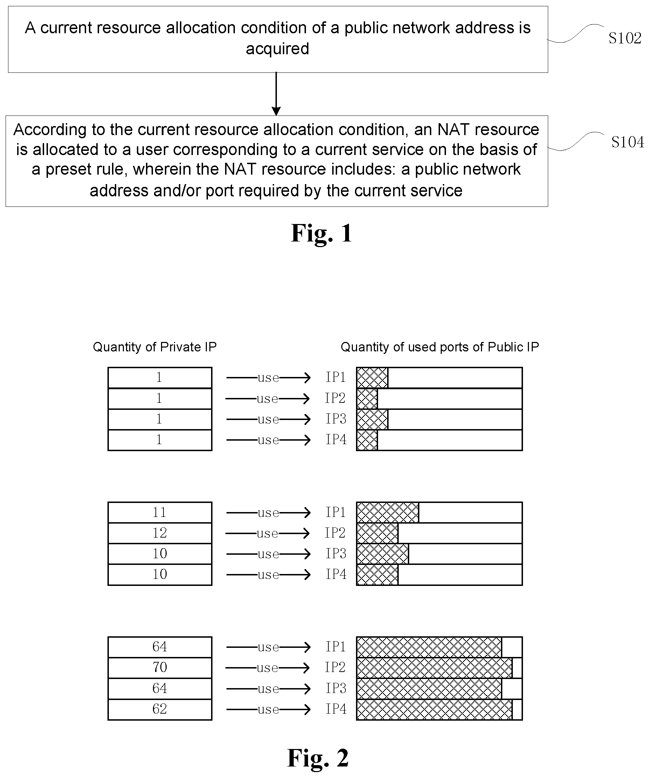

In order to solve the above-mentioned technical problem, an embodiment of the present disclosure provides an NAT resource allocation method. Fig. 1 is a flowchart of an NAT resource allocation method according to an embodiment of the present disclosure. As shown in Fig. 1, the method includes the following steps.

Step S102: A current resource allocation condition of a public network address is acquired.

Step S104: An NAT resource to a user corresponding to a current service is allocated on the basis of a preset rule according to the current resource allocation condition, wherein the NAT resource includes: a public network address and/or port required by the current service.

By means of each of the above-mentioned steps, the technical solution for allocating a public network address and/or port of a current service according to an acquired current allocation condition of an NAT resource is adopted, thereby solving the technical problem about a perfect NAT resource allocation solution in the related art, and providing a better NAT resource allocation solution. Moreover, an allocation mode is simple and highly effective. That is, the present disclosure solves the problem of adverse impact on applications such as P2P caused by NAT by standardizing port allocation behaviours for NAT.

Alternatively, the preset rule is determined according to at least one of the following parameters: a maximum quantity of private network addresses corresponding to a public network address, quantity of ports allocated to the user corresponding to the current service, quantity of users corresponding to the public network address, a current usage condition of ports in the public network address, and a corresponding relationship between the public network address and the users.

In an alternative example of the embodiments of the present disclosure, the step that an NAT resource to a user corresponding to a current service is allocated on the basis of a preset rule according to the current resource allocation condition includes that: when the current usage condition of ports in the current public network address is lower than a preset threshold, the ports are allocated to the user in the current public network address. In a specific implementation process, the preset threshold may refer to that ports of the public network address are allocated least currently or private network addresses adopting the ports currently are least. It is not limited in the embodiments of the present disclosure.

By using the above-mentioned technical solution, a relatively idle public network address (the current usage condition of the ports is lower than the preset threshold) is used. Under a distributed type, when public network addresses are scattered on different Central Processing Units (CPUs), uniformity of traffic share is facilitated. Moreover, under the condition that the quantity of users and the quantity of public network addresses are certain, loads of the public network addresses are basically balanced.

Besides, the relatively idle public network address does not collide with a share proportion, but they may be combined instead. During allocation of a public network address, a public network address which conforms to a share proportion and is relatively idle may be found for allocation. The value of the share proportion may be increased to allow a public network address to be used by more users and to allow a user to use more ports.

That is, in a specific implementation process, in order to solve the problem that ports of a certain public network address are exhausted untimely and a user using the address cannot allocate ports therefrom although there are many other public network address ports, when a first traffic of the user comes, a current port or port block is allocated thereto by using a relatively idle (idlest in extreme situations) public network address. In the embodiment of the present disclosure, in order to make a provided NAT resource allocation mode more accurate and efficient, the embodiment of the present disclosure also provides a limit to a user share proportion and quantity of ports for each user. That is, the maximum quantity of users for which a public network address is allocated is limited, the maximum quantity of public network address ports used by a user is limited, and the share proportion needs to be better planned by related personnel: the quantity of public network addresses corresponding to private network addresses, and the quantity of public network ports probably allocated for each user. That is to say, the share proportion allows a public network address to be occupied by several users using few ports (even offline users), and limits from being used by other users using excessive ports.

It is important to note that the quantity of ports of the public network address is compared for allocation in a PAT technology, and ports of a main protocol may be simply added for comparison as for ports allocated on the basis of a protocol. For example, the port allocation numbers of TCP and UDP are added. A PR performs partitioning from an IP having a relatively idle port block number, thereby ensuring that port blocks can be incrementally allocated for the same user from the IP subsequently. On AAA or NAT, allocation of port blocks to a user may follow this mode.

In another alternative example of the embodiments of the present disclosure, the step that an NAT resource of a current service is allocated on the basis of a preset rule according to the resource allocation condition includes that: a port set used by the user is determined according to the quantity of the ports allocated to the user corresponding to the current service as for each public network address; and the ports are allocated to the user cyclically according to an ascending sequence of port numbers in the port set.

As mentioned in the technical solution provided in the embodiments of the present disclosure, the ports are allocated cyclically according to an ascending sequence of port numbers. That is, the ports are allocated from front to back until a port having the maximum port number is allocated, and then the operation is returned. The port (certainly, including the allocated port which will be reallocated immediately after being recovered) which was allocated just now is not used to the greatest extent. The basic idea is port maintenance: reallocation in case of maintenance for a certain time after releasing the port.

Certainly, the above-mentioned port allocation process may also include the following technical solution. The allocation of PAT is performed from front to back according to the whole port range of a public network address, in the port range, preferably. The allocation of PR is performed from front to back according to a port section of the public network address; allocation from front to back follows general behaviours for port allocation, thereby ensuring, to a great extent, that the previously allocated port may be reused trustingly after a cycle; allocation from front to back may be combined with port maintenance, wherein this mode may be that the ports allocated from front to back are ended in port maintenance; the ports are randomly allocated; and a subsequent section of ports of the public network address is preferably allocated, and a previous section of ports is allocated finally.

Based on a further improvement on the above-mentioned technical solution in the embodiments of the present disclosure, the step that an NAT resource to a user corresponding to a current service is allocated on the basis of a preset rule according to the resource allocation condition further includes that: the same public network address is allocated to the user according to a Try-Best principle. That is, the same public network address is allocated for the same user preferably according to a Try-Best principle, and the ports of the same user address are allocated on the same public network address to the greatest extent. As for Dual-stack lite, when there are excessive private network IPv4 addresses in a flexible line, a user address may be a private network IPv4 address; and when there are fewer private network IPv4 addresses in the flexible line, a user address may be a flexible line address.

The advantages of the Try-Best principle are that: an application demand for using the same public network address is ensured, and applications without such demand are considered. When public network address ports used by the user are allocated completely, continuous allocation may be performed on another public network address. Services will not be blocked for applications without the same address demand. When the user uses two or more public network addresses, a public network address used for Try-Best user allocation shall be newest. For example, the user uses IP1, and then uses IP2 after IP1 ports are exhausted, and subsequent user port allocation shall be performed on IP2 to the greatest extent. Although IP1 has allocated some ports and application using these ports may require the same address, the cost for continuously trying to allocate the same port on IP1 is high, and applications on IP2 cannot be considered.

In practical application, the process that an NAT resource to a user corresponding to a current service is allocated on the basis of a preset rule according to the resource allocation condition further includes that: ALG well-known ports are prohibited from being allocated to the user, and ports used by a specified service are prohibited from being predefined. That is, the ALG well-known ports of the public network address are not allocated in the embodiment of the present disclosure, and are not allowed to be allocated for a service represented by an unknown port. For example, a No. 21 public network address port cannot be dynamically allocated to an unknown service unless static mapping specifying. The technical solution can effectively prevent a message of the port from being used falsely, which may be an NAT device itself.

In conclusion, NAT in the conventional art does not suggest how to allocate resources, so resource allocation behaviours may not facilitate services. The present disclosure provides a resource allocation method, capable of allocating the same public network address for the same user to the greatest extent. Therefore, the problem brought by allocation of services such as P2P to different public network addresses is better solved. Some best practical advices for resource allocation are provided.

In order to better understand the public network address usage condition in case of increase of user quantity and traffic and the reallocation condition of the changed public network address used by the user, the conditions are illustrated below with the embodiments.

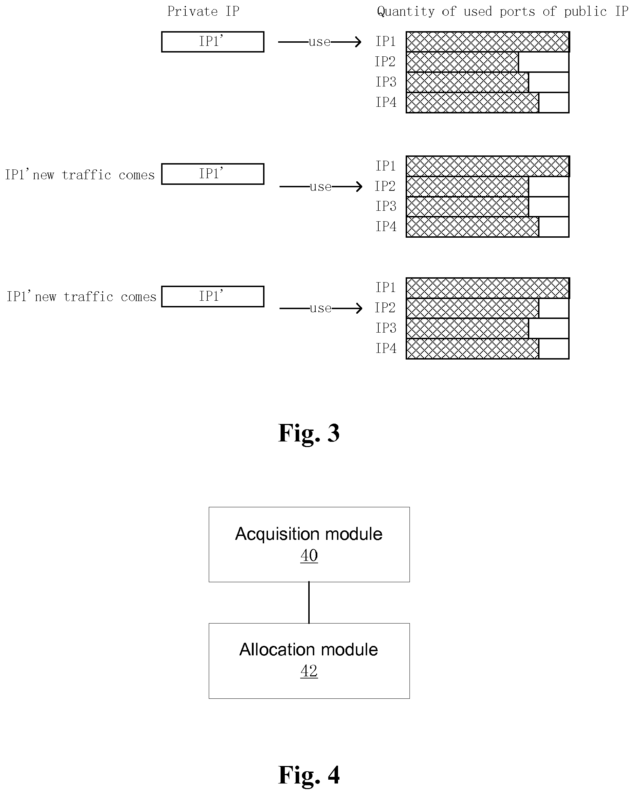

Implementation of the technical solution will be further described in detail below with Fig. 2 and Fig. 3.

It is important to note that in Fig. 2, a first traffic of a user comes, and an address corresponding to an idlest port is allocated; with the increase of user quantity and traffic, public network address ports are evenly used, thereby avoiding that a certain public network address is exhausted untimely, a crossed frame representing a used part. In Fig. 3, when the public network address used by the user is exhausted, a new traffic is allocated for another public network address port, a subsequent traffic uses a new public network address, a crossed frame representing a used part.

The hardware parts include an NAT device and 11 terminals having a network communication function. The terminal 1 to the terminal 10 are located in an internal network, and the terminal 11 is located in an external network and serves as a server.

Processing steps for a software part are as follows.

First step: NAT related configuration is performed on a CGN device
(1) configuration of an ingress interface, such as:
   interface fei-0/1/0/1
   ip nat inside
   ip address 172.0.0.1 255.255.255.0
(2) NAT configuration, such as:
   cgn 1
   cgn-pool 1
   section 1 100.0.0.2 100.0.0.3
   ip nat inside source list 1 pool 1 overload

Second step: the terminal 1 to the terminal 10 send messages via fei-0/1/0/1 to the server, and each terminal sends a message and observes a resource allocation condition. The quantity of the ports allocated to the public network address 100.0.0.2 and the quantity of the ports allocated to the public network address 100.0.0.3 should be basically the same.

Third step: the terminal 1 to the terminal 10 send messages via fei-0/1/0/1 to the server, and each terminal sends 100 messages and observes a resource allocation condition. The quantity of the ports allocated to the public network address 100.0.0.2 and the quantity of the ports allocated to the public network address 100.0.0.3 should be basically the same.

Fourth step: the terminal 1 to the terminal 10 send messages via fei-0/1/0/1 to the server, and each terminal sends 10000 messages and observes a resource allocation condition. The quantity of the ports allocated to the public network address 100.0.0.2 and the quantity of the ports allocated to the public network address 100.0.0.3 should be basically the same.

### Embodiment 2:

Implementation of the technical solution will be further described in detail below with Fig. 2 and Fig. 3.

The hardware parts include an NAT device and 11 terminals having a network communication function. The terminal 1 to the terminal 10 are located in an internal network, and the terminal 11 is located in an external network and serves as a server.

Processing steps for a software part are as follows.

First step: NAT related configuration is performed on a CGN device
(1) configuration of an ingress interface, such as:
   interface fei-0/1/0/1
   ip nat inside
   ip address 172.0.0.1 255.255.255.0
(2) NAT configuration, such as:
   cgn 1
   cgn-pool 1
   section 1 100.0.0.2 100.0.0.3
   ip nat inside source list 1 pool 1 overload

Second step: The terminal 1 to the terminal 10 send messages via fei-0/1/0/1 to the server, and each terminal sends 1000 messages and observes a resource allocation condition. The quantity of the ports allocated to the public network address 100.0.0.2 and the quantity of the ports allocated to the public network address 100.0.0.3 should be basically the same.

Third step: two terminals using the public network address 100.0.0.2 are chosen, such as a terminal X and a terminal Y. The terminal X sends 60000 messages via fei-0/1/0/1 to the server, and observes a resource allocation condition. The ports allocated to the public network address 100.0.0.2 should be almost exhausted.

Fourth step: the terminal Y sends 30000 messages via fei-0/1/0/1 to the server, and observes a resource allocation condition. The ports allocated to the public network address 100.0.0.2 are exhausted. Ports are allocated on 100.0.0.3 subsequently (even if ports are released probably on 100.0.0.2 due to aging)

### Embodiment 3:

Implementation of the technical solution will be further described in detail below with Fig. 2 and Fig. 3.

The hardware parts include an NAT device and 17 terminals having a network communication function. The terminal 1 to the terminal 16 are located in an internal network, and the terminal 17 is located in an external network and serves as a server.

Processing steps for a software part are as follows.

First step: NAT related configuration is performed on a CGN device
(1) configuration of an ingress interface, such as:
   interface fei-0/1/0/1
   ip nat inside
   ip address 172.0.0.1 255.255.255.0
(2) NAT configuration, such as:
   cgn 1
   cgn-pool 1
   section 1 100.0.0.2 100.0.0.3
   port-range size 2048
   ip nat inside source list 1 pool 1 overload

Second step: the terminal 1 to the terminal 16 send messages from fei-0/1/0/1 to the server, and each terminal sends 1000 messages and observes a resource allocation condition. The quantity of the ports allocated to the public network address 100.0.0.2 and the quantity of the ports allocated to the public network address 100.0.0.3 shall be basically same.

Third step: a terminal using a public network address 100.0.0.2 such as a terminal X is preferred. The terminal X sends 10000 messages via fei-0/1/0/1 to the server, and observes a resource allocation condition. New port blocks of the terminal X can be allocated on the same public network address 100.0.0.2.

An NAT resource allocation device is also provided in the present embodiment, to implement the above embodiment and a preferred implementation mode. Those which have been illustrated will not be elaborated herein. Modules involved in the device are illustrated below. Just as a term 'module' used below, the combination of software and/or hardware with predetermined functions may be implemented. Although the device described by the following embodiment is better implemented by software, the implementation of hardware or the combination of software and hardware may be possible and conceived. Fig. 4 is a structural diagram of an NAT resource allocation device according to a preferred embodiment of the present disclosure. As shown in Fig. 4, the device includes:
an acquisition module 40, configured to acquire a current resource allocation condition of a public network address; and
an allocation module 42, connected to the acquisition module 40, and configured to allocate an NAT resource to a user corresponding to a current service on the basis of a preset rule according to the current resource allocation condition, wherein the NAT resource includes: a public network address and/or port required by the current service.

By means of combination of all the above-mentioned steps, the technical solution for allocating a public network address and/or port of a current service according to an acquired current allocation condition of an NAT resource is adopted, thereby solving the technical problem about a perfect NAT resource allocation solution in the related art, and providing a better NAT resource allocation solution. Moreover, an allocation mode is simple and highly effective.

Alternatively, the allocation module 42 is configured to allocate the NAT resource to the user corresponding to the current service on the basis of the preset rule determined according to at least one of the following parameters: a maximum quantity of private network addresses corresponding to a public network address, quantity of ports allocated to the user corresponding to the current service, quantity of users corresponding to the public network address, a current usage condition of ports in the public network address, and a corresponding relationship between the public network address and the users.

Moreover, the allocation module 42 is further configured to allocate, when the current usage condition of ports in the current public network address is lower than a preset threshold, the ports to the user in the current public network address.

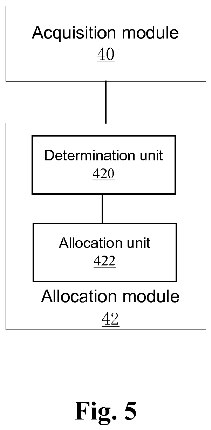

Based on a further improvement on the above-mentioned technical solution in the embodiments of the present disclosure, as shown in Fig. 5, the allocation module 42 includes: a determination unit 420, configured to determine a port set used by the user according to the quantity of the ports allocated for the user corresponding to the current service as for each public network address; and an allocation unit 422, connected to the determination unit 420 and configured to allocate the ports to the user cyclically according to an ascending sequence of port numbers in the port set.

In addition, all function units in all embodiments of the present disclosure may be integrated in a processing unit, or each unit may exist separately and physically, or two or more units may be integrated in a unit. The integrated unit may be implemented in a hardware form or may be implemented in a software function unit form.

It is important to note that the description and claims of the present disclosure and terms 'first', 'second' and the like in the above-mentioned drawings are used to distinguish similar objects, and do not need to describe a specific sequence or a precedence order. It will be appreciated that objects used in such a way may be exchanged under appropriate conditions, in order that the embodiments of the present disclosure described here can be implemented in a sequence other than sequences graphically shown or described here. In addition, terms 'include' and 'have' and any inflexions thereof are intended to cover non-exclusive inclusions. For instance, it is not limited for processes, methods, systems, products or devices containing a series of steps or units to clearly list those steps or units, and other steps or units which are not clearly listed or are inherent to these processes, methods, products or devices may be included instead.

In conclusion, the embodiments of the present disclosure achieve the following beneficial effects. The above-mentioned technical solution provided in the embodiments of the present disclosure manages a router more flexibly by increasing a capability to connect the router via any management interface, achieves a more reliable effect, and further improves the usage experience of a user.

Apparently, those skilled in the art shall understand that all modules or all steps in the present disclosure may be implemented by using a general calculation device, may be centralized on a single calculation device or may be distributed on a network composed of a plurality of calculation devices. Alternatively, they may be implemented by using executable program codes of the calculation devices. Thus, they may be stored in a storage device and executed by the calculation devices, the shown or described steps may be executed in a sequence different from this sequence under certain conditions, or they are manufactured into each integrated circuit module respectively, or a plurality of modules or steps therein is manufactured into a single integrated circuit module. Thus, the present disclosure is not limited to a combination of any specific hardware and software.

The above is only the preferred embodiments of the present disclosure, and not intended to limit the present disclosure. There may be various modifications and variations in the present disclosure for those skilled in the art. Any modifications, equivalent replacements, improvements and the like in the principle of the present disclosure shall fall in the scope of protection of the present disclosure.

### Industrial Applicability

Based on the above-mentioned technical solution provided in the embodiments of the present disclosure, the technical solution for allocating a public network address and/or port of a current service according to an acquired current allocation condition of an NAT resource is adopted, thereby solving the technical problem about a perfect NAT resource allocation solution in the related art, and providing a better NAT resource allocation solution. Moreover, an allocation mode is simple and highly effective.

## Claims

1. A method for allocating Network Address Translation (NAT) resource, comprising:
acquiring a current resource allocation condition of a public network address; and
allocating an NAT resource to a user corresponding to a current service on the basis of a preset rule according to the current resource allocation condition, wherein the NAT resource comprises: a public network address and/or port required by the current service.

2. The method as claimed in claim 1, wherein the preset rule is determined according to at least one of the following parameters:
a maximum quantity of private network addresses corresponding to the public network address, quantity of ports allocated to the user corresponding to the current service, quantity of users corresponding to the public network address, a current usage condition of ports in the public network address, and a corresponding relationship between the public network address and the users.

3. The method as claimed in claim 1, wherein allocating an NAT resource to a user corresponding to a current service on the basis of a preset rule according to the current resource allocation condition comprises:
when the current usage condition of ports in the current public network address is lower than a preset threshold, allocating the ports in the current public network address to the user.

4. The method as claimed in claim 1, wherein allocating an NAT resource of a current service on the basis of a preset rule according to the resource allocation condition comprises:
for each public network address, determining a port set used by the user according to the quantity of the ports allocated to the user corresponding to the current service ; and
allocating the ports in the port set to the user cyclically according to an ascending sequence of port numbers.

5. The method as claimed in claim 1, wherein allocating an NAT resource to a user corresponding to a current service on the basis of a preset rule according to the resource allocation condition further comprises:
allocating the same public network address to the user according to a Try-Best principle.

6. The method as claimed in any one of claims 1 to 5, wherein in the process of allocating an NAT resource to the user corresponding to the current service on the basis of a preset rule, f prohibiting Application Layer Gateway (ALG) well-known ports from being allocated to the user, and prohibiting ports used by a specified service from being predefined.

7. A device for allocating Network Address Translation (NAT) resource, comprising:
an acquisition module, configured to acquire a current resource allocation condition of a public network address; and
an allocation module, configured to allocate an NAT resource to a user corresponding to a current service on the basis of a preset rule according to the current resource allocation condition, wherein the NAT resource comprises: a public network address and/or port required by the current service.

8. The device as claimed in claim 7, wherein the allocation module is configured to allocate the NAT resource to the user corresponding to the current service on the basis of the preset rule determined according to at least one of the following parameters: a maximum quantity of private network addresses corresponding to a public network address, quantity of ports allocated to the user corresponding to the current service, quantity of users corresponding to the public network address, a current usage condition of ports in the public network address, and a corresponding relationship between the public network address and the users.

9. The device as claimed in claim 7, wherein the allocation module is configured to allocate, when the current usage condition of ports in the current public network address is lower than a preset threshold, the ports in the current public network address to the user.

10. The device as claimed in claim 7, wherein the allocation module comprises:
a determination unit, configured to, for each public network address, determine a port set used by the user according to the quantity of the ports allocated to the user corresponding to the current service ; and
an allocation unit, configured to allocate the ports to the user cyclically according to an ascending sequence of port numbers in the port set.
